# EUROPÄISCHE PATENTSCHRIFT

(11) **EP 1 492 683 B1**
(45) Veröffentlichungstag und Bekanntmachung des Hinweises auf die Patenterteilung: **08.08.2007**
(21) Anmeldenummer: 03729813.0
(22) Anmeldetag: 21.03.2003
(51) Int. Cl.: B60K 15/10

(54) **KRAFTSTOFFFÖRDEREINHEIT FÜR EIN KRAFTFAHRZEUG**
FUEL TRANSPORT UNIT FOR A MOTOR VEHICLE
UNITE DE REFOULEMENT DE CARBURANT POUR AUTOMOBILE

(30) Priorität: 09.04.2002 DE 10215652
(43) Veröffentlichungstag der Anmeldung: 05.01.2005
(73) Patentinhaber: SIEMENS AKTIENGESELLSCHAFT, 80333 München (DE)
(72) Erfinder: HERZOG, Bernd, 65597 Hünfelden (DE); NATHER, Helmut, 65520 Bad Camberg (DE)
(86) Internationale Anmeldenummer: PCT/DE2003/000955
(87) Internationale Veröffentlichungsnummer: WO 2003/084775

(56) Entgegenhaltungen:
- EP-A- 0 864 458
- JP-A- 4 140 500
- US-A1- 2001 055 530

## Beschreibung

Die Erfindung betrifft eine Kraftstofffördereinheit für ein Kraftfahrzeug mit einem zur Anordnung in einem Kraftstoffbehälter vorgesehenen Schwalltopf, mit einer Saugstrahlpumpe zur Führung von Kraftstoff von einem Bereich des Kraftstoffbehälters in einen anderen Bereich, bei der eine Treibmittelleitung der Saugstrahlpumpe ein Druckbegrenzungsventil mit einem Auslass hat.

Solche Kraftstofffördereinheiten werden in heutigen Kraftfahrzeugen häufig eingesetzt und sind aus der Praxis bekannt. Die Treibmittelleitung ist häufig an einem von einer Brennkraftmaschine des Kraftfahrzeuges in den Kraftstoffbehälter zurückgeführten Rücklaufleitung oder einem Abzweig einer Vorlaufleitung angeschlossen und beispielsweise in einem Flansch des Kraftstoffbehälters angeordnet. Das Druckbegrenzungsventil öffnet oberhalb eines vorgesehenen Drucks und führt überschüssigen Kraftstoff über den Auslass ab. Hierdurch wird der Maximaldruck in der Treibmittelleitung der Saugstrahlpumpe begrenzt.

Es ist weiterhin eine Kraftstofffördereinheit bekannt, wobei die Saugstrahlpumpe, der Anschlussstutzen der Treibmittelleitung und ein Flansch zur Anbindung einer Kraftstoffpumpe einen gemeinsamen, einstückig gefertigten Grundkörper aufweisen.

US 2001055530 offenbart eine Kraftstofffördereinheit gemäß dem Oberbegriff des Anspruchs 1.

Nachteilig bei der bekannten Kraftstofffördereinheit ist, dass der durch den Auslass des Druckbegrenzungsventils abgeführte Kraftstoff im Kraftstoffbehälter unkontrolliert umgewälzt wird. Dies führt zu einer starken Permeation von Kraftstoff in die Umgebung und zu störenden Geräuschen.

Der Erfindung liegt das Problem zugrunde, eine Kraftstofffördereinheit der eingangs genannten Art so zu gestalten, dass sie ein Umwälzen von Kraftstoff im Kraftstoffbehälter besonders gering hält.

Dieses Problem wird erfindungsgemäß dadurch gelöst, dass die Saugstrahlpumpe, der Anschlussstutzen der Treibmittelleitung, ein Teilbereich des Gehäuses des Druckbegrenzungsventils und ein Flansch zur Anbindung einer Kraftstoffpumpe einen gemeinsamen, einstückig gefertigten Grundkörper aufweisen, das Druckbegrenzungsventil in einem Verteiler für mehrere Saugstrahlpumpen angeordnet ist und der Auslass des Druckbegrenzungsventils in den Schwalltopf mündet.

Bei als Satteltank ausgebildeten Kraftstoffbehältern mit mehreren Saugstrahlpumpen, welchen den Kraftstoff von einer Kammer zu einer anderen Kammer zu fördern, erfordert die erfindungsgemäße Kraftstofffördereinheit einen besonders geringen Aufwand.

Durch diese Gestaltung gelangt der von dem Druckbegrenzungsventil abgeführte Kraftstoff in den Ansaugbereich der erfindungsgemäßen Kraftstofffördereinheit. Daher werden die Entfernungen, die der über den Auslass abgeführte Kraftstoff zurücklegt, besonders klein gehalten. Weiterhin strömt der über den Auslass abgeführte Kraftstoff ausschließlich im Schwalltopf, so dass ein Umwälzen des Kraftstoffs im Kraftstoffbehälter außerhalb des Schwalltopfes vermieden wird. Ein weiterer Vorteil dieser Gestaltung besteht darin, dass Strömungsgeräusche am Druckbegrenzungsventil durch den Schwalltopf gedämpft werden.

Das Druckbegrenzungsventil könnte beispielsweise über eine Leitung mit dem Schwalltopf verbunden sein. Die erfindungsgemäße Kraftstofffördereinheit erfordert jedoch besonders wenige zu montierende Bauteile, wenn das Druckbegrenzungsventil innerhalb des Schwalltopfes angeordnet ist. Hierdurch gelangt bei einer entsprechenden Anordnung des Auslasses der abgeführte Kraftstoff automatisch in den Schwalltopf.

Die Bauteile des Druckbegrenzungsventils lassen sich gemäß einer anderen vorteilhaften Weiterbildung der Erfindung besonders einfach montieren, wenn der Anschlussstutzen oder der Verteiler der Treibmittelleitung eine Aufnahme für Bauteile des Druckbegrenzungsventils hat.

Die Aufnahme für die Bauteile des Druckbegrenzungsventils lässt sich gemäß einer anderen vorteilhaften Weiterbildung der Erfindung besonders klein und kompakt gestalten, wenn ein Deckel des Druckbegrenzungsventils die Aufnahme übergreift.

Zur weiteren Verringerung der Anzahl der Bauteile der erfindungsgemäßen Kraftstofffördereinheit trägt es bei, wenn das Druckbegrenzungsventil zwischen einem Gehäuse eines Verteilers oder der Saugstrahlpumpe und einem Anschlussstutzen angeordnet ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: schematisch eine erfindungsgemäße, in einem Kraftstoffbehälter angeordnete Kraftstoffför-dereinheit,
- Fig.2: einen Grundkörper mit einer Saugstrahlpumpe der erfindungsgemäßen Kraftstofffördereinheit aus Figur 1 in einem stark vergrößerten Längsschnitt,
- Fig.3: einen Verteiler der erfindungsgemäßen Kraftstofffördereinheit aus Figur 1,
- Fig.4: eine Schnittdarstellung durch den Verteiler aus Figur 3 entlang der Linie IV - IV.

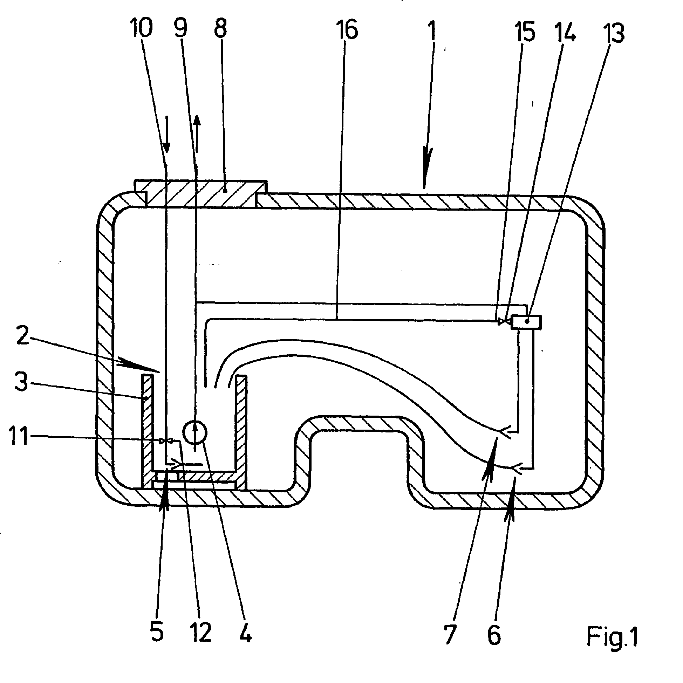

Figur 1 zeigt schematisch einen Kraftstoffbehälter 1 für ein Kraftfahrzeug mit einer darin angeordneten Kraftstofffördereinheit 2 in einer Schnittdarstellung. Die Kraftstofffördereinheit 2 hat einen Schwalltopf 3 mit einer darin angeordneten Kraftstoffpumpe 4 und mehreren Saugstrahlpumpen 5 - 7 zur Befüllung des Schwalltopfes 3. Der Schwalltopf 3 ist unterhalb eines Montageflansches 8 des Kraftstoffbehälters 1 angeordnet. Die Kraftstoffpumpe 4 fördert über eine Vorlaufleitung 9 Kraftstoff zu einer nicht dargestellten Brennkraftmaschine des Kraftfahrzeuges. Über eine Rücklaufleitung 10 wird überschüssiger Kraftstoff in den Kraftstoffbehälter 1 zurückgeführt. Eine der Saugstrahlpumpen 5 ist im Schwalltopf 3 angeordnet und über ein Druckbegrenzungsventil 11 mit der Rücklaufleitung 10 verbunden. Die Rücklaufleitung 10 ist damit als Treibmittelleitung zur Versorgung der Saugstrahlpumpe mit Treibmittel ausgebildet. Diese Saugstrahlpumpe 5 saugt Kraftstoff vom Bodenbereich des Kraftstoffbehälters 1 an und fördert diesen in den Schwalltopf 3. Ein Auslass 12 des Druckbegrenzungsventils 11 mündet unmittelbar in den Schwälltopf 3. Die zwei weiteren Saugstrahlpumpen 6, 7 sind in einem von dem Schwalltopf 3 entfernten Bereich des Kraftstoffbehälters 1 angeordnet und über einen Verteiler 13 mit der Vorlaufleitung 9 verbunden. Diese Saugstrahlpumpen 6, 7 fördern Kraftstoff von dem von dem Schwalltopf 3 entfernten Bereich des Kraftstoffbehälters 1 in den Schwalltopf 3. Ein Druckbegrenzungsventil 14 ist in dem Verteiler 13 angeordnet und hat einen Auslass 15, an dem eine in den Schwalltopf 3 geführte Leitung 16 angeschlossen ist.

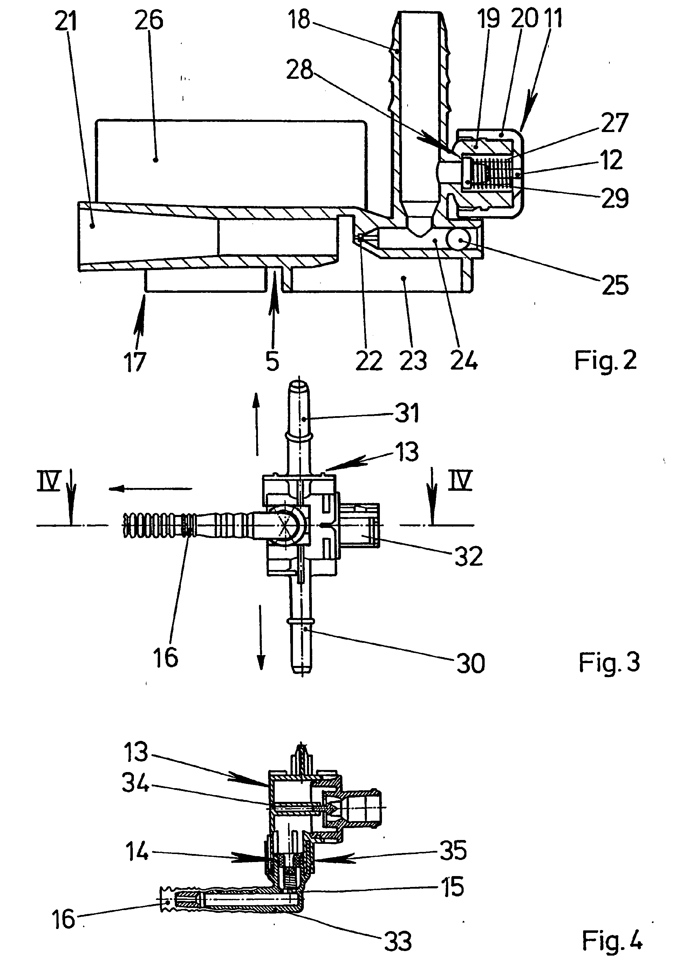

Figur 2 zeigt einen Grundkörper 17 mit der im Bodenbereich des Schwalltopfes 3 aus Figur 1 angeordneten Saugstrahlpumpe 5 und mit dem Druckbegrenzungsventil 11. Das Druckbegrenzungsventil 11 ist in einem Anschlussstutzen 18 für die Rücklaufleitung 10 angeordnet. Zur Aufnahme der Bauteile des Druckbegrenzungsventils 11 ist der Anschlussstutzen 18 einstückig mit einer Aufnahme 19 gefertigt. Die Aufnahme 19 wird von einem Deckel 20 übergriffen. Die Saugstrahlpumpe 5 weist ein Mischrohr 21 und eine Düse 22 auf. Zwischen der Düse 22 und dem Mischrohr 21 befindet sich ein Ansaugbereich 23 der Saugstrahlpumpe 5, welche den Boden des in Figur 1 dargestellten Schwalltopfes 3 durchdringt. Zur Vereinfachung der Fertigung des Grundkörpers 17 ist ein zu der Düse 22 der Saugstrahlpumpe 5 geführter Kanal 24 mit einer eingepressten Kugel 25 verschlossen. Weiterhin hat der Grundkörper 17 einen Flansch 26 zur Anbindung der in Figur 1 dargestellten Kraftstoffpumpe 4. Das Druckbegrenzungsventil 11 weist einen von einer Feder 27 gegen einen Ventilsitz 28 vorgespannten Ventilkörper 29 auf. Bei einem Übersteigen eines vorgesehenen Drucks in dem Anschlussstutzen 18 der Rücklaufleitung 9 wird der Ventilkörper 29 von dem Ventilsitz 28 weggedrückt und überschüssiger Kraftstoff kann durch den Auslass 12 in den in Figur 1 dargestellten Schalltopf 3 austreten.

Figur 3 zeigt den Verteiler 13 aus Figur 1 mit zwei Anschlüssen 30, 31 für die in Figur 1 dargestellten Saugstrahlpumpen 6, 7 und einem Anschluss 32 für die Vorlaufleitung 9. Figur 4 zeigt in einer Schnittdarstellung durch den Verteiler 13 aus Figur 3 entlang der Linie IV - IV, dass das Druckbegrenzungsventil 14 zwischen einem Anschlussstutzen 33 des Auslasses 15 und einem Gehäuse 34 des Verteilers 13 angeordnet ist. Der Anschlussstutzen 33 des Auslasses 15 und das Gehäuse 34 des Verteilers 13 sind über eine Rastverbindung 35 miteinander verbunden. Das Druckbegrenzungsventil 14 ist wie das in Figur 2 dargestellte Druckbegrenzungsventil 11 aufgebaut.

## Patentansprüche

1. Kraftstofffördereinheit für ein Kraftfahrzeug mit einem zur Anordnung in einem Kraftstoffbehälter vorgesehenen Schwalltopf, mit einer Saugstrahlpumpe zur Führung von Kraftstoff von einem Bereich des Kraftstoffbehälters in einen anderen Bereich, bei der eine Treibmittelleitung der Saugstrahlpumpe ein Druckbegrenzungsventil mit einem Auslass hat, **dadurch gekennzeichnet, dass** die Saugstrahlpumpe (5), der Anschlussstutzen (18) der Treibmittelleitung, ein Teilbereich des Gehäuses des Druckbegrenzungsventils (11) und ein Flansch (26) zur Anbindung einer Kraftstoffpumpe (4) einen gemeinsamen, einstückig gefertigten Grundkörper (17) aufweisen, dass das Druckbegrenzungsventil (14) in einem Verteiler (13) für mehrere Saugstrahlpumpen (6, 7) angeordnet ist, und dass der Auslass (12, 15) des Druckbegrenzungsventils (11, 14) in den Schwalltopf (3) mündet.

2. Kraftstofffördereinheit nach Anspruch 1, **dadurch gekennzeichnet, dass** das Druckbegrenzungsventil (11) innerhalb des Schwalltopfes (3) angeordnet ist.

3. Kraftstofffördereinheit nach zumindest einem der vorhergehenden Ansprüche, **dadurch gekennzeichnet, dass** der Anschlussstutzen (18) oder der Verteiler (13) der Treibmittelleitung eine Aufnahme (19) für Bauteile des Druckbegrenzungsventils (11, 14) hat.

4. Kraftstofffördereinheit nach zumindest einem der vorhergehenden Ansprüche, **dadurch gekennzeichnet, dass** ein Deckel (20) des Druckbegrenzungsventils (11) die Aufnahme (19) übergreift.

5. Kraftstofffördereinheit nach zumindest einem der vorhergehenden Ansprüche, **dadurch gekennzeichnet, dass** das Druckbegrenzungsventil (14) zwischen einem Gehäuse (34) des Verteilers (13) oder der Saugstrahlpumpe (5) und einem Anschlussstutzen (33) angeordnet ist.

## Claims

1. Fuel feed unit for a motor vehicle having a surge chamber which is provided for arrangement in a fuel tank, and having a suction jet pump for guiding fuel from one region of the fuel tank into another region, in which a working fluid line of the suction jet pump has a pressure-limiting valve with an outlet, **characterized in that** the suction jet pump (5), the connecting branch (18) of the working fluid line, a subregion of the housing of the pressure-limiting valve (11) and a flange (26) for the connection of a fuel pump (4) have a common basic body (17) manufactured integrally, **in that** the pressure-limiting valve (14) is arranged in a distributor (13) for a plurality of suction jet pumps (6, 7) and **in that** the outlet (12, 15) of the pressure-limiting valve (11, 14) leads into the surge chamber (3).

2. Fuel feed unit according to claim 1, **characterized in that** the pressure-limiting valve (11) is arranged within the surge chamber (3).

3. Fuel feed unit according to at least one of the preceding claims, **characterized in that** the connecting branch (18) or the distributor (13) of the working fluid line has a receptacle (19) for components of the pressure-limiting valve (11, 14).

4. Fuel feed unit according to at least one of the preceding claims, **characterized in that** a cover (20) of the pressure-limiting valve (11) fits over the receptacle (19).

5. The fuel feed unit according to at least one of the preceding claims, **characterized in that** the pressure-limiting valve (14) is arranged between a housing (34) of the distributor (13) or the suction jet pump (5) and a connecting branch (33).

## Revendications

1. Unité de refoulement de carburant pour véhicule automobile, comportant un pot d'accumulation prévu pour être installé dans un réservoir à carburant, une pompe à jet aspirant permettant de transférer du carburant d'un compartiment du réservoir à carburant dans un autre compartiment, où une conduite de fluide moteur de la pompe à jet aspirant a une soupape de limitation de pression avec un orifice de décharge, **caractérisée par le fait que** la pompe à jet aspirant (5), la tubulure de raccordement (18) de la conduite de fluide moteur, une partie du boîtier de la soupape (11) de limitation de pression et une bride (26) destinée à fixer une pompe à carburant (4) comportent une base (17) commune fabriquée en une seule pièce, que la soupape (14) de limitation de pression est placée dans un distributeur (13) pour plusieurs pompes à jet aspirant (6, 7) et que l'orifice de décharge (12, 15) de la soupape (11, 14) de limitation de pression débouche dans le pot d'accumulation (3).

2. Unité de refoulement de carburant selon la revendication 1, **caractérisée par le fait que** la soupape (11) de limitation de pression est placée à l'intérieur du pot d'accumulation (3).

3. Unité de refoulement de carburant selon au moins l'une des revendications précédentes, **caractérisée par le fait que** la tubulure de raccordement (18) ou le distributeur (13) de la conduite de fluide moteur ont un logement (19) pour les composants de la soupape (11, 14) de limitation de pression.

4. Unité de refoulement de carburant selon au moins l'une des revendications précédentes, **caractérisée par le fait qu'**un couvercle (20) de la soupape (11) de limitation de pression recouvre le logement (19).

5. Unité de refoulement de carburant selon au moins l'une des revendications précédentes, **caractérisée par le fait que** la soupape (14) de limitation de pression est placée entre un boîtier (34) du distributeur (13) ou de la pompe à jet aspirant (5) et une tubulure de raccordement (33).
